# EUROPEAN PATENT SPECIFICATION

(11) **EP 1 188 120 B1**
(45) Date of publication and mention of the grant of the patent: **07.06.2006**
(21) Application number: 00908634.9
(22) Date of filing: 14.02.2000
(51) Int. Cl.: G06F 13/40

(54) **COMPUTER DOCKING SYSTEM AND METHOD**
RECHNERANKOPPELSYSTEM UND VERFAHREN
SYSTEME ET PROCEDE D'ACCOSTAGE D'ORDINATEUR

(43) Date of publication of application: 20.03.2002
(60) Divisional application: 05015568.8
(73) Proprietor: Tao Logic Systems LLC, Las Vegas NV (US)
(72) Inventor: AHERN, Frank, Scottsdale, AZ 85254 (US)
(74) Representative: Legg, Cyrus James Grahame
(86) International application number: PCT/US2000/003752
(87) International publication number: WO 2001/061512

(56) References cited:
- EP-A- 0 820 021
- EP-A- 0 844 567
- DE-A- 19 829 212
- US-A- 5 764 924
- US-A- 5 991 839

## Description

### 1. Field of the Invention

The present invention relates to data processing systems, and more particularly, to docking systems including mechanisms for transferring information between buses.

### 2. Description of Related Art

Computers can use buses to transfer data between a host processor and various devices, such as memory devices and input/output devices. As used herein an "input/output" device is a device that either generates an input or receives an output (or does both). Thus "input/output" is used in the disjunctive. These buses may be arranged in a hierarchy with the host processor connected to a high level bus reserved for exchanging the data most urgently needed by the processor. Lower level buses may connect to devices having a lower priority.

Other reasons exist for providing separate buses. Placing an excessive number of devices on one bus produces high loading. Such loading makes a bus difficult to drive because of the power needed and the delays caused by signaling so many devices. Also, some devices on a bus may periodically act as a master and request control over a bus in order to communicate with a slave device. By segregating some devices on a separate bus, master devices can communicate with other devices on the lower level bus without tying up the bus used by the host processor or other masters.

The PCI bus standard is specified by the PCI Special Interest Group of Hillsboro, Oregon. The PCI bus features a 32-bit wide, multiplexed address-data (AD) bus portion, and can be expanded to a 64-bit wide AD bus portion. Maintaining a high data throughput rate (e.g., a 33 MHZ clock rate) on the PCI bus leads to a fixed limitation on the number of electrical AC and DC loads on the bus. Speed considerations also limit the physical length of the bus and the capacitance that can be placed on the bus by the loads, while future PCI bus rates (e.g., 66 MHZ) will exacerbate the electrical load and capacitance concerns. Failure to observe these load restrictions can cause propagation delays and unsynchronized operation between bus devices.

To circumvent these loading restrictions, the PCI bus standard specifies a bridge to allow a primary PCI bus to communicate with a secondary PCI bus through such a bridge. Additional loads may be placed on the secondary bus without increasing the loading on the primary bus. For bridges of various types see U.S. Patents 5,548,730 and 5,694,556.

The PCI bridge observes a hierarchy that allows an initiator or bus master on either bus to complete a transaction with a target on the other bus. As used herein, hierarchy refers to a system for which the concept of a higher or lower level has meaning. For example, a PCI bus system is hierarchical on several scores. An ordering of levels is observed in that a high level host processor normally communicates from a higher level bus through a bridge to a lower level bus. An ordering of levels is also observed in that buses at equal levels do not communicate directly but through bridges interconnected by a higher level bus. Also, an ordering of levels is observed in that data is filtered by their addresses before being allowed to pass through a bridge, based on the levels involved. Other hierarchical systems exist that may observe an ordering of levels by using one or more of the foregoing concepts, or by using different concepts.

Some personal computers have slots for add-on cards, which allow the card to connect to a peripheral bus in the computer. Because a user often needs additional slots, expansion cards have been designed that will connect between the peripheral bus and an external unit that offers additional slots for add-on cards. For systems for expanding a bus, see U.S. Patents 5,006,981; 5,191,657; and 5,335,329. See also U.S. Patent 5,524,252.

For portable computers, special considerations arise when the user wishes to connect additional peripheral devices. Often a user will bring a portable computer to a desktop and connect through a docking station or port replicator to a keyboard, monitor, printer or the like. A user may also wish to connect to a network through a network interface card in the docking station. At times, a user may need additional devices such as hard drives or CD-ROM drives. While technically possible to a limited extent, extending a bus from a portable computer through a cable is difficult because of the large number of wires needed and because of latencies caused by a cable of any significant length.

In U.S. Patent 5,696,949 a host chassis has a PCI to PCI bridge that connects through a cabled bus to another PCI to PCI bridge in an expansion chassis. This system is relatively complicated since two independent bridges communicate over a cabled bus. This cabled bus includes essentially all of the lines normally found in a PCI bus. This approach employs a delay technique to deal with clock latencies associated with the cabled bus. A clock signal generated on the expansion side.of the cabled bus: (a) is sent across the cabled bus, but experiences a delay commensurate with the cable length; and (b) is delayed an equivalent amount on the expansion side of the cabled bus by a delay line there, before being used on the expansion side. Such a design complicates the system and limits it to a tuned cable of a pre-designed length, making it difficult to accommodate work spaces with various physical layouts.

U.S. Patent 5,590,377 shows a primary PCI bus in a portable computer being connected to a PCI to PCI bridge in a docking station. When docked, the primary and secondary buses are physically very close. A cable is not used to allow separation between the docking station and the portable computer. With this arrangement, there is no interface circuitry between the primary PCl bus and the docking station. See also U.S. Patent 5,724,529.

U.S. Patent 5,540,597 suggests avoiding additional PCMCIA connectors when connecting a peripheral device to a PC card slot in a portable computer, but does not otherwise disclose any relevant bridging techniques.

U.S. Patents 4,882,702 and show a programmable controller for controlling industrial machines and processes. The system exchanges data serially with a variety of input/output modules. One of these modules may be replaced with an expansion module that can serially communicate with several groups of additional input/output modules. This system is not bridge-like in that the manner of communicating with the expansion module is different than the manner of communicating with the input/output modules. For the expansion module the system changes to a block transfer mode where a group of status bytes are transferred for all the expansion devices. This system is also limited to input/output transactions and does not support a variety of addressable memory transactions. See also U.S. Patent 4,413,319; and 4,504,927.

In U.S. Patent 5,572,525 another bus designed for instrumentation (IEEE 488 General Purpose Instrumentation Bus) connects to an extender that breaks the bus information into packets that are sent serially through a transmission cable to another extender. This other extender reconstructs the serial packets into parallel data that is applied to a second instrumentation bus. This extender is an intelligent system operating through a message interpretation layer and several other layers before reaching the parallel to serial conversion layer. Thus this system is unlike a bridge. This system is also limited in the type of transactions that it can perform. See also U.S. Patent 4,959,833.

U.S. Patent 5,325,491 shows a system for interfacing a local bus to a cable with a large number of wires for interfacing with remote peripherals. See also U.S. Patents 3,800,067; 4,787,029; 4,961,140; and 5,430,847.

The Small Computer System Interface (SCSI) defines bus standards for a variety of peripheral devices. This SCSI bus is part of an intelligent system that responds to high-level commands. Consequently, SCSI systems require software drivers to enable hardware to communicate to the SCSI bus. This fairly complicated system is quite different from bridges such as bridges as specified under the PCI standard. A variety of other complex techniques and protocols exist for transferring data, including Ethernet, Token Ring, TCP/IP, ISDN, FDDI, HIPPI, ATM, Fibre Channel, etc., but these bear little relation to bridge technology.

See also U.S. Patents 4,954,949; 5,038,320; 5,111,423; 5,446,869; 5,495,569; 5,497,498; 5,507,002; 5,517,623; 5,530,895; 5,542,055; 5,555,510; 5,572,688; and 5,611,053.

EP 0811938 discloses the use of subordinate bus devices in a computer system having a central processing unit and a bus. This document also discloses a bridge that consists of two hierarchical bridges which join a primary and a secondary bus of the system in order to avoid modification of the system's BIOS.

DE 19829212 discloses a bus bridge comprising primary and secondary PCI buses interconnected by first and second interfaces residing respectively an the primary and secondary buses. The interfaces are connected by a serial link. The bridge behaves as a single PCI-to-PCI bus bridge. The use of the bridge in a docking system is also disclosed.

Accordingly, there is a need for an improved system for transferring information between buses.

### SUMMARY OF THE INVENTION

In accordance with the illustrative embodiments demonstrating features and advantages of the present invention, there is provided a docking system and method, as claimed in the appendant claims 1 and 42.

By employing apparatus and methods of the foregoing type, an improved system is achieved for transferring information between buses. In one preferred embodiment, two buses communicate over a duplex link formed with a pair of simplex links, each employing twisted pair or twin axial lines (depending on the desired speed and the anticipated transmission distance). Information from the buses are first loaded onto FIFO (first-in first-out) registers before being serialized into frames for transmission over the link. Received frames are deserialized and loaded into FIFO registers before being placed onto the destination bus. Preferably, interrupts, error signals, and status signals are sent along the link.

In this preferred embodiment, address and data are taken from a bus one transaction at a time, together with four bits that act either as control or byte enable signals. Two or more additional bits may be added to tag each transaction as either: an addressing cycle; acknowledgment of a non-posted write; data burst; end of data burst (or single cycle). If these transactions are posted writes they can be rapidly stored in a FIFO register before being encoded into a number of frames that are sent serially over a link. When pre-fetched reads are allowed, the FIFO register can store pre-fetched data in case the initiator requests it. For single cycle writes or other transactions that must await a response, the bridge can immediately signal the initiator to wait, even before the request is passed to the target.

In a preferred embodiment, one or more of the buses follows the PCI or PCMCIA bus standard (although other bus standards can be used instead). The preferred apparatus then operates as a bridge with a configuration register that is loaded with information specified under the PCI standard. The apparatus can transfer information between buses depending upon whether the pending addresses fall within a range embraced by the configuration registers. This scheme works with devices on the other side of the bridge, which can be given unique base addresses to avoid addressing conflicts.

In one highly preferred embodiment, the apparatus may be formed as two separate application-specific integrated circuits (ASIC) joined by a cable. Preferably, these two integrated circuits have the same structure, but can act in two different modes in response to a control signal applied to one of its pins. Working with hierarchical buses (primary and secondary buses) these integrated circuits will be placed in a mode appropriate for its associated bus. The ASIC associated with the secondary bus preferably has an arbiter that can grant masters control of the secondary bus. This preferred ASIC can also supply a number of ports to support a mouse and keyboard, as well as parallel and serial ports.

When used with a portable computer, one of the ASIC's can be assembled with a connector in a package designed to fit into a PC card slot following the PCMCIA standard. This ASIC can connect through a cable to the other ASIC, which can be located in a docking station. Accordingly, the apparatus can act as a bridge between a CardBus and a PCI bus located in a docking station. Since the preferred ASIC can also provide a port for a mouse and keyboard, this design is especially useful for a docking station. Also, the secondary PCI bus implemented by the ASIC can connect to a video card or to a video processing circuit on the main dock circuit board in order to drive a monitor.

In some embodiments, one ASIC will be mounted in the portable computer by the original equipment manufacturer (OEM). This portable computer will have a special connector dedicated to the cable that connects to the docking station with the mating ASIC. For such embodiments, the existence within the preferred ASIC of ports for various devices can be highly advantageous. An OEM can use this already existing feature of the ASIC and thereby eliminate circuitry that would otherwise have been needed to implement such ports.

### BRIEF DESCRIPTION OF THE DRAWINGS

The above brief description as well as other objects, features and advantages of the present invention will be more fully appreciated by reference to the following detailed description of presently preferred but nonetheless illustrative embodiments in accordance with the present invention when taken in conjunction with the accompanying drawings, wherein:
Figure 1 is a schematic block diagram showing a bridge split by a link within the bridge, in accordance with principles of the present invention;
Figure 2 is a schematic block diagram showing a bridge in accordance with principles of the present invention using the link of Figure 1;
Figure 3 is a schematic block diagram showing the bridge of Figure 2 used in a docking system in accordance with principles of the present invention;
Figure 4 is a cross-sectional view of the cable of Figure 3;
Figure 5 is a schematic illustration of the bridge of Figure 3 shown connected to a portable computer and a variety of peripheral devices; and
Figure 6 shows a docking station similar to that of Figure 5 but with the portable computer modified to contain an application-specific integrated circuit designed to support a link to the docking station.

### DETAILED DESCRIPTION OF THE PREFERRED EMBODIMENTS

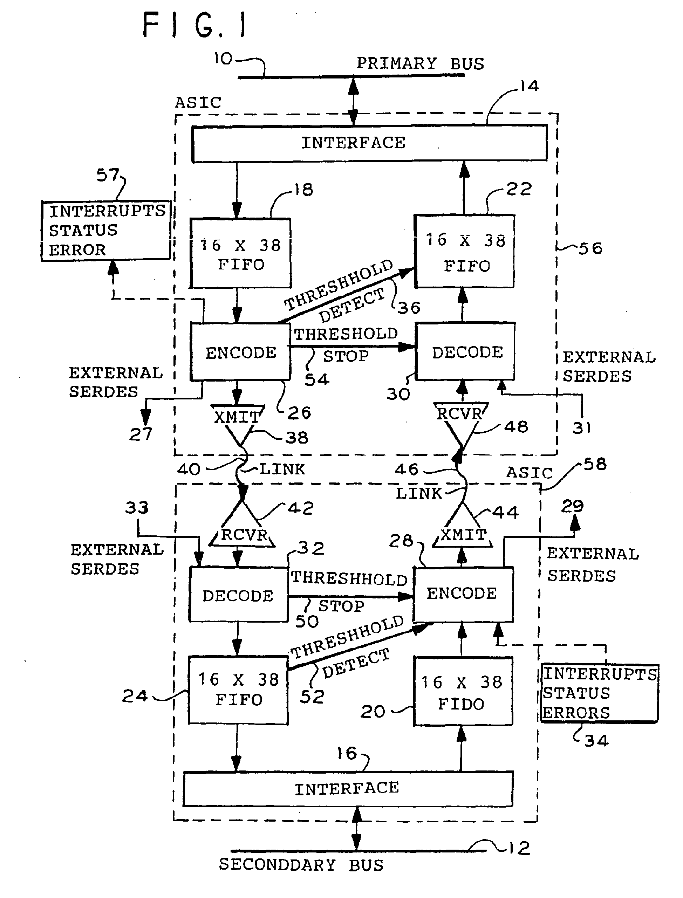

Referring to Figure 1, a bridge is shown connecting between a first bus 10 and a second bus 12 (also referred to as primary bus 10 and secondary bus 12). These buses may be PCI or PCMCIA 32-bit buses, although other types of buses are contemplated and the present disclosure is not restricted to any specific type of bus. Buses of this type will normally have address and data lines. In some cases, such as with the PCI bus, address and data are multiplexed onto the same lines. In addition, these buses will have signaling lines for allowing devices on the bus to negotiate transactions. For the PCI standard, these signaling lines will include four lines that are used either for control or byte enabling (C/BE[3:0]). Others signaling lines under the PCI standard exist for gaining control over the bus, for handshaking, and the like (e.g., FRAMED, TRDY#, IRDY#, STOP#, DEVSEL#, etc.)

Buses 10 and 12 are shown connecting to a first interface means 14 and second interface means 16, respectively (also referred to as interfaces 14 and 16). Bus information selected for transmission by interfaces 14 and 16 are loaded into registers 18 and 20, respectively. Incoming bus information that interfaces 14 and 16 select for submission to the buses are taken from registers 22 and 24, respectively. In one embodiment, registers 18-24 are each 16 X 38 FIFO registers, although different types of registers having different dimensions may be used in alternate embodiments.

In this embodiment, registers 18-24 are at least 38 bits wide. Thirty six of those bits are reserved for the 4 control bits (C/BE#[3:0]) and the 32 address/data bits (AD[31:0]) used under the PCI bus standard. The remaining two bits can be used to send additional tags for identifying the nature of the transaction associated therewith. Other bits may be needed to fully characterize every contemplated transaction. Transactions can be tagged as: addressing cycle; acknowledgment of a non-posted write; data burst; end of data burst (or single cycle). Thus outgoing write transactions can be tagged as a single cycle transaction or as part of a burst. Outgoing read requests can also be tagged as part of a burst with a sequence of byte enable codes (C/BE) for each successive read cycle of the burst. It will be appreciated that other coding schemes using a different number of bits can be used in other embodiments.

The balance of the structure illustrated in Figure 1 is a link designed to establish duplex communications between interfaces 14 and 16 through registers 18-24. For example, encoder 28 can accept the oldest 38 bits from register 20 and parse it into five bytes (40 bits). The extra two bits of the last byte are encoded to signify the interrupts, status signals and error signals that may be supplied from block 34.

Each of these five bytes is converted into a 10 bit frame that can carry the information of each byte, as well as information useful for regulating the link. For example, these frames can carry comma markers, idle markers, or flow control signals, in a well-known fashion. A transceiver system working with bytes that were encoded into such 10 bit frames is sold commercially by Hewlett Packard as model number HDMP-1 636 or -1 646. Frames produced by encoder 28 are forwarded through transmitter 44 along simplex link 46 to receiver 48, which supplies the serial information to decoder 30. Likewise, encoder 26 forwards serial information through transmitter 38 along simplex link 40 to receiver 42, which supplies the serial information to decoder 32.

Flow control may be necessary should FIFO registers 22 or 24 be in danger of overflowing. For example, if FIFO register 22 is almost full, it supplies a threshold detect signal 36 to encoder 26, which forwards this information through link 40 to decoder 32. In response, decoder 32 issues a threshold stop signal 50 to encoder 28, which then stops forwarding serial information, thereby preventing an overflow in FIFO register 22. In a similar fashion, a potential overflow in FIFO register 24 causes a threshold detect signal 52 to flow through encoder 28 and link 46 to cause decoder 30 to issue a threshold stop signal 54, to stop encoder 26 from sending more frames of information. In some embodiments, the system will examine the received information to determine if it contains transmission errors or has been corrupted in some fashion. In such event the system can request a retransmission of the corrupted information and thereby ensure a highly reliable link.

In this embodiment, elements 14, 18, 22, 26, 30, 38 and 48 are part of a single, application specific integrated circuit (ASIC) 56. Elements 16, 20, 24, 28, 32, 42 and 44 are also part of an ASIC 58. As described further hereinafter, first ASIC 56 and second ASIC 58 have an identical structure but can be operated in different modes. It will be appreciated that other embodiments may not use ASIC's but may use instead alternate circuitry, such as a programable logic device, or the like. As shown herein, ASIC 56 is operating in a mode designed to service primary bus 10, and (for reasons to be described presently) will be sending outputs to block 57. In contrast block 34 of ASIC 58 will receive inputs from block 34.

Encoders 26 and 28 have optional parallel outputs 27 and 29, respectively, for applications requiring such information. Also for such applications, decoders 30 and 32 have parallel inputs 31 and 33, respectively. These optional inputs and outputs may be connected to an external transceiver chip, such as the previously mentioned device offered by Hewlett Packard as model number HDMP-1 636 or -1646. These devices will still allow the system to transmit serial information, but by means of an external transceiver chip. This allows the user of the ASIC's 56 and 58 more control over the methods of transmission over the link.

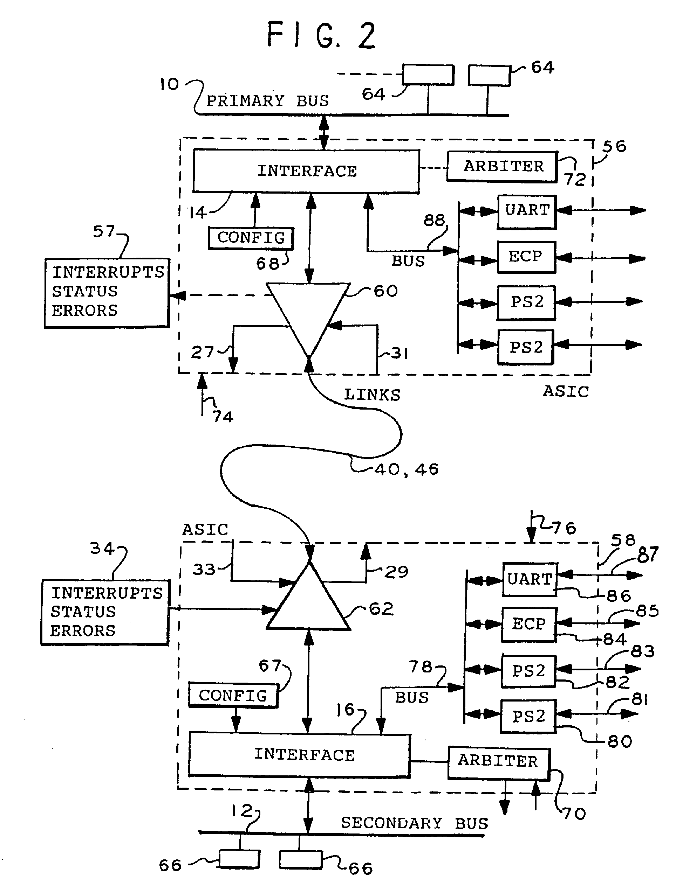

Referring to Figure 2, previously mentioned ASIC's 56 and 58 are shown in further detail. The previously mentioned encoders, decoders, transmitters, receivers, and FIFO registers are combined into blocks 60 and 62, which are interconnected by a duplex cable formed of previously mentioned simplex links 40 and 46. Previously mentioned interface 14 is shown connected to primary bus 10, which is also connected to a number of bus-compatible devices 64. Similarly, previously mentioned interface 16 is shown connected to secondary bus 12, which is also connected to a number of bus-compatible devices 66. Devices 64 and 66 may be PCI-compliant devices and may operate as memory devices or input/output devices.

Interface 14 a shown connected to a first register means 68, which acts as a configuration register in compliance with the PCI standard. Since this system will act as a bridge, configuration registers 68 will have the information normally associated with a bridge. Also, configuration registers 68 will contain a base register and limit register to indicate a range or predetermined schedule of addresses for devices that can be found on the secondary bus 12. Under the PCI standard, devices on a PCI bus will themselves each have a base register, which allows mapping of the memory space and/or I/O space. Consequently, the base and limit registers in configuration registers 68 can accommodate the mapping that is being performed by individual PCI devices. The information on configuration registers 68 are mirrored on second configuration register 67 (also referred to as a second configuration means). This makes the configuration information readily available to the interfaces on both sides of the link.

In this embodiment, ASIC 58 has an arbiter 70. Arbiters are known devices that accept requests from masters on secondary bus 1 2 for control of the bus. The arbiter has a fair algorithm that grants the request of one of the contending masters by issuing it a grant signal. In this hierarchical scheme, secondary bus 12 requires bus arbitration, but primary bus 10 will provide its own arbitration. Accordingly, ASIC 56 is placed in a mode where arbiter 72 is disabled. The modes of ASIC's 56 and 58 are set by control signals applied to control pins 74 and 76, respectively. Because of this mode selection, the signal directions associated with blocks 57 and 34 will be reversed.

In this embodiment, ASIC 58 is in a mode that implements a third bus 78. Bus 78 may follow the PCI standard, but is more conveniently implemented in a different standard. Bus 78 connects to a number of devices that act as a port means. For example, devices 80 and 82 can implement PS/2 ports that can connect to either a mouse or a keyboard. Device 84 implements an ECP/EPP parallel port for driving a printer or other device. Device 86 implements a conventional serial port. Devices 80, 82, 84 and 86 are shown with input/output lines 81, 83, 85 and 87, respectively. Devices 80-86 may be addressed on bus 10 as if they were PCI devices on bus 12. Also in this embodiment, a bus 88 is shown in ASIC 56, with the same devices as shown on bus 78 to enable an OEM to implement these ports without the need for separate input/output circuits.

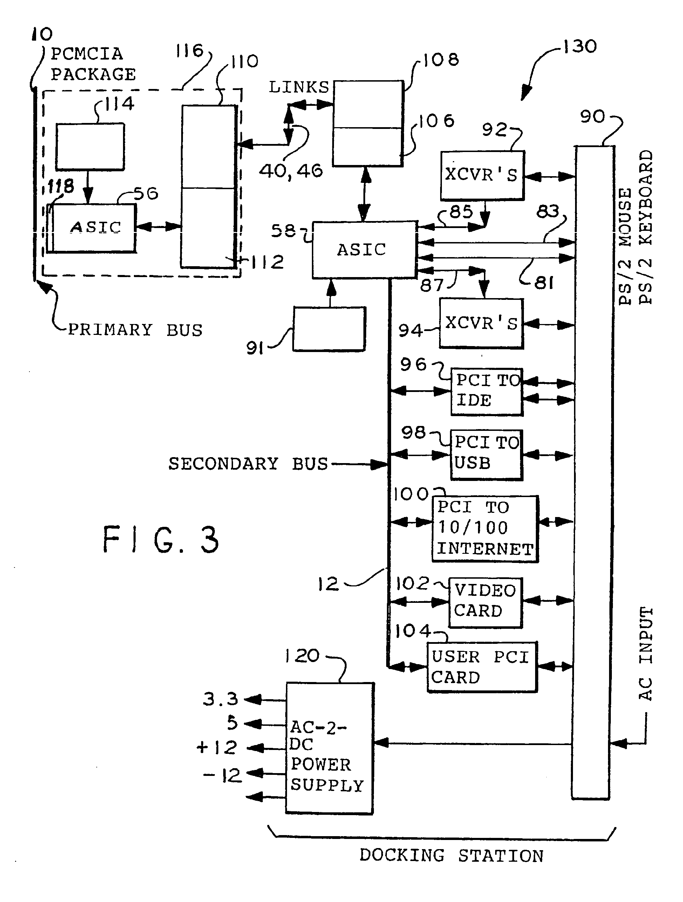

Referring to Figure 3, previously mentioned ASIC 58 is shown in a docking station 130 connected to an oscillator 91 for establishing a remote and internal clock. ASIC 58 has its lines 81 and 83 connected through a connection assembly 90 for connection to a keyboard and mouse, respectively. Serial lines 85 and parallel lines 87 are shown connected to transceivers 92 and 94, respectively, which then also connect to connection assembly 90 for connection to various parallel and serial peripherals, such as printers and modems.

ASIC 58 is also shown connected to previously mentioned secondary bus 12. Bus 12 is shown connected to an adapter card 96 to allow the PCI bus 12 to communicate with an IDE device such as a hard drive, backup tape drive, CD-ROM drive, etc. Another adapter card 98 is shown for allowing communications from bus 12 to a universal serial port (USB). A network interface card 100 will allow communications through bus 12 to various networks operating under the Ethernet standard, Token Ring standard, etc. Video adapter card 102 (also referred to as a video means) allows the user to operate another monitor. Add-on card 104 may be one of a variety of cards selected by the user to perform a useful function. While this embodiment shows various functions being implemented by add-on cards, other embodiments may implement one or more of these function on a common circuit board in the dock (e.g., all functions excluding perhaps the IDE adapter card).

ASIC 58 communicates through receiver/transmitter 106, which provides a physical interface through a terminal connector 108 to cable 40, 46. Connector 108 may be a 20 pin connector capable of carrying high speed signals with EMI shielding (for example a low force helix connector of the type offered by Molex Incorporated), although other connector types may be used instead. The opposite end of cable 40, 46 connects through a gigabit, terminal connector 110 to physical interface 112, which acts as a receiver/transmitter. Interface 112 is shown connected to previously mentioned first ASIC 56, which is also shown connected to an oscillator 114 to establish a local clock signal. This specific design contemplates using an external transmitter/receiver (external SERDES of lines 27, 29, 31, and 33 of Figure 1), although other embodiments can eliminate these external devices in favor of the internal devices in ASIC's 56 and 58.

This embodiment is adapted to cooperate with a portable computer having a PCMCIA 32-bit bus 10, although other types of computers can be serviced. Accordingly, ASIC 56 is shown in a package 116 having an outline complying with the PCMCIA standard and allowing package 116 to fit into a slot in a portable computer. Therefore, ASIC 56 has a connector 118 for connection to bus 10. Cable 40, 46 will typically be permanentiy connected to package 116, but a detachable connector may be used in other embodiments, where a user wishes to leave package 116 inside the portable computer.

Power supply 1 20 is shown producing a variety of supply voltages used to power various components. In some embodiments, one of these supply lines can be connected directly to the portable computer to charge its battery.

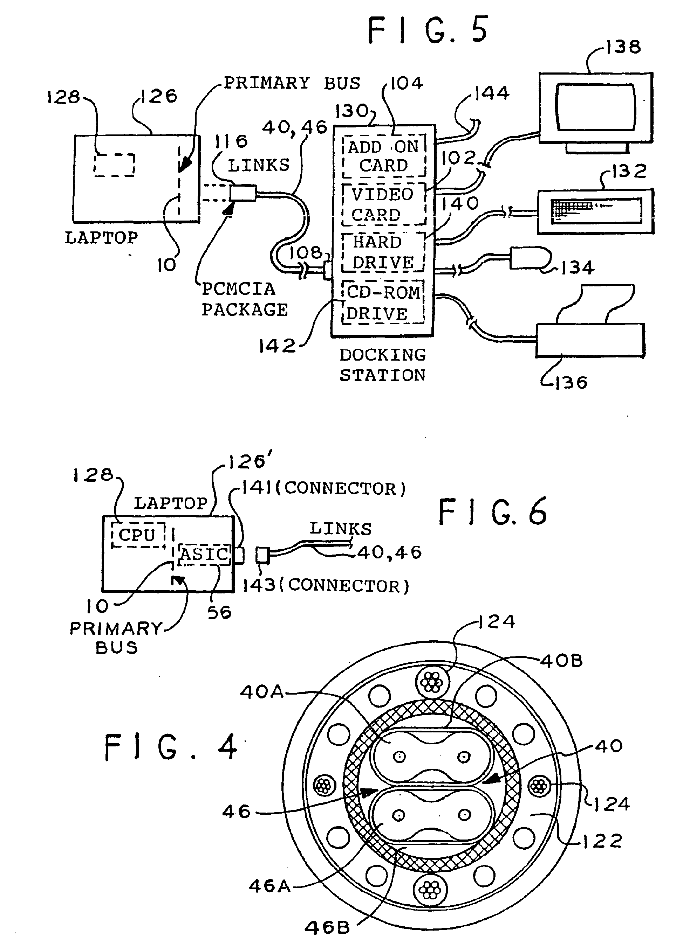

Referring to Figure 4, the previously mentioned simplex links 40 and 46 are shown as twin axial lines 40A and 46A, wrapped with individual shields 40B and 46B. A single shield 122 encircles the lines 40 and 46. Four parallel wires 124 are shown (although a greater number may be used in other embodiments) mounted around the periphery of shields 122 for various purposes. These wires 124 may carry power management signals, dock control signals or other signals that may be useful in an interface between a docking station and a portable computer. While twin axial lines offer high performance, twisted pairs or other transmission media may be used in other embodiments where the transmission distance is not as great and where the bit transfer speed need not be as high. While a hard wire connection is illustrated, in other embodiments a wireless or other type of connection can be employed instead.

Referring to Figure 5, previously mentioned package 116 is shown in position to be connected to a PCMCIA slot in portable computer 126. Computer 126 is shown having primary bus 10 and a host processor 128. Package 116 is shown connected through cable 40, 46 to previously mentioned connector 108 on docking station 130. Previously mentioned docking station 130 is shown connecting through PS/2 ports to keyboard 132 and mouse 134. A printer 136 is shown connected to a parallel port in docking station 130. Previously mentioned video means 102 is shown connected to a monitor 138. Docking station 130 is also shown with an internal hard drive 140 connecting to the adapter card previously mentioned. A CD-ROM drive 142 is also shown mounted in docking station 130 and connects to the secondary bus through an appropriate adapter card (not shown). Previously mentioned add-on card 104 is shown with its own cable 144.

Referring to Figure 6, a modified portable computer 126' is again shown with a host processor 128 and primary bus 10. In this embodiment however, portable computer 126' contains previously mentioned ASIC 56. Thus there is no circuitry required (other than perhaps drivers) between ASIC 56 and cable 40,46. In this case, the laptop end of cable 40, 46 has a connector 143 similar to the one on the opposite end of the cable (connector 108 of Figure 5). Connector 143 is designed to mate with connector 141 and support the highspeed link. As before, connectors 141 and 143 can also carry various power management signals, and other signals associated with a docking system.

An important advantage of this arrangement is the fact that ASIC 56 contains circuitry for providing ports, such as a serial port, a parallel port, PS/2 ports for a mouse and keyboard, and the like. Since portable computer 126' would ordinarily provide such ports, ASIC 56 simplifies the design of the portable computer. This advantage is in addition to the advantage of having a single ASIC design (that is, ASIC's 56 and 58 are structured identically), which single design is capable of operating at either the portable computer or the docking station, thereby simplifying the ASIC design and reducing stocking requirements, etc.

To facilitate an understanding of the principles associated with the foregoing apparatus, its operation will be briefly described. This operation will be described in connection with the docking system of Figures 3 and 5 (which generally relates to Figure 2), although operation would be similar for other types of arrangements. For the docking system, a connection is established by plugging package 116 (Figure 5) into portable computer 126. This establishes a link between the primary bus 10 and ASIC 56 (Figure 3).

At this time an initiator (the host processor or a master) having access to primary bus 10 may assert control of the bus. An initiator will normally send a request signal to an internal arbiter (not shown) that will eventually grant control to this initiator. In any event, the initiator asserting control over primary bus 10 will exchange the appropriate handshaking signals and drive an address onto the bus 10. Control signals simultaneously applied to the signaling lines of bus 10 will indicate whether the transaction is a read, write, or other type of transaction.

Interface 14 (Figure 2) will examine the pending address and determine whether it represents a transaction with devices on the other side of the bridge (that is, secondary bus 12) or with the bridge itself. Configuration register 68 has already been loaded in the usual manner with information that indicates a range of addresses defining the jurisdiction of the interface 14.

Assuming a write transaction is pending on bus 10, interface 14 will transfer 32 address bits together with four control bits (PCI standard) to FIFO register 18 (Figure 1). Encoder 26 will add at least two additional bits tagging this information as an addressing cycle. The information is then broken into frames that can carry flow control and other signals before being transmitted serially over link 40.

Without waiting, interface 14 will proceed to a data cycle and accept up to 32 bits of data from bus 10 together with four byte enable bits. As before, this information will be tagged, supplemented with additional information and broken into frames for serial transmission over link 40. This transmitted information will be tagged to indicate whether it is part of a burst or a single cycle.

Upon receipt, decoder 32 restores the frames into the original 38 bit format and loads the last two described cycles onto the stack of register 24. Interface 16 eventually notices the first cycle as an addressing cycle in a write request. Interface 1 6 then negotiates control over bus 12 in the usual fashion and applies the address to bus 12. A device on bus 12 will respond to the write request by performing the usual handshaking.

Next, interface 1 6 will drive the write data stacked on register 24 into bus 12. If this transaction is a burst, interface 16 will continue to drive data onto bus 12 by fetching it from register 24. If however this transaction is a single cycle write, interface 16 will close the transaction on bus 12 and load an acknowledgment into register 20. Since this acknowledgment need not carry data or address information, a unique code may be placed into register 20, so that encoder 28 can appropriately tag this line before parsing it into frames for transmission over link 46. Upon receipt, decoder 30 will produce a unique code that is loaded into register 22 and eventually forwarded to interface 14, which sends an acknowledgment to the device on bus 10 that the write has succeeded.

If the initiator instead sets its control bits during the address cycle to indicate a read request, interface 14 would also accept this cycle, if it has jurisdiction. Interface 14 will also signal the initiator on bus 10 that it is not ready to return data (e.g., a retry signal, which may be the stop signal as defined under the PCI standard). The initiator can still start (but not finish) a data cycle by driving its signaling lines on bus 10 with byte enable information. Using the same technique, the address information, followed by the byte enable information, will be accepted by interface 14 and loaded with tags into register 18. These two lines of information will be then encoded and transmitted serially over link 40. Upon receipt, this information will be loaded into the stack of register 24. Eventually, interface 16 will notice the first item as a read request and drive this address information onto secondary bus 12. A device on bus 12 will respond and perform the appropriate handshaking. Interface 16 will then forward the next item of information from register 24 containing the byte enables, onto bus 12 so the target device can respond with the requested data. This responsive data is loaded by interface 16 into register 20. If pre-fetching is indicated, interface 16 will initiate a number of successive read cycles to accumulate data in register 20 from sequential addresses that may or may not be requested by the initiator.

As before, this data is tagged, broken into frames and sent serially over link 46 to be decoded and loaded into register 22. The transmitted data can include pre-fetched data that will be accumulated in register 22. Interface 14 transfers the first item of returning data onto primary bus 10, and allows the initiator to proceed to another read cycle if desired. If another read cycle is conducted as part of a burst transaction, the requested data will already be present in register 22 for immediate delivery by interface 14 to bus 10. If these pre-fetched data are not requested for the next cycle, then they are discarded.

Eventually the initiator will relinquish control of bus 10. Next, an initiator on bus 1 2 may send a request for control of bus 12 to arbiter 70 (Figure 2). If arbiter 70 grants control, the initiator may make a read or write request by driving an address onto bus 12. Interface 16 will respond if this address does not fall within the jurisdictional range of addresses specified in configuration register 67 (indicating the higher level bus 10 may have jurisdiction). In the same manner as before, but with a reversed flow over links 40, 46, interface 16 may accept address and data cycles and communicate them across link 40, 46. Before being granted bus 10, interface 14 will send a request to an arbiter (not shown) associated with bus 10.

In some instances, an initiator on primary bus 10 will wish to read from, or write to, port means 80, 82, 84, or 86. These four items are arranged to act as devices under the PCI standard. Interface 16 will therefore act as before, except that information will be routed not through bus 12, but through bus 78.

Other types of transactions may be performed, including reads and writes to the configuration registers 67 and 68 (Figure 2). Other types of transactions, as defined under the PCI standard (or other bus standards) may be performed as well.

interrupt signals may be generated by the ports or other devices in ASIC 58. Also external interrupts may be received as indicated by block 34. As noted before, interrupt signals may be embedded in the code sent over link 46. Upon receipt, system 60 decodes the interrupts and forwards them on to block 57, which may be simply one or more pins from ASIC 56 (implementing, for example, INTA of the PCI standard). This interrupt signal can either be sent over the bus 10 or to an interrupt controller that forwards interrupts to the host processor. System errors may be forwarded in a similar fashion to produce an output on a pin of ASIC 56 that can be routed directly to bus 10 or processed using dedicated hardware. The designer may wish to send individual status signals, which can be handled in a similar fashion along link 40, 46.

It is appreciated that various modifications may be implemented with respect to the above described, preferred embodiment. In other embodiments the illustrated ASIC's may be divided into several discrete packages using in some cases commercially available integrated circuits. Also, the media for the link may be wire, fiber-optics, infrared light, radio frequency signals, or other media. In addition, the primary and secondary buses may each have one or more devices, and these devices may be in one or more categories, including memory devices and input/output devices. Moreover, the devices may operate at a variety of clock speeds, bandwidths and data rates. Furthermore, transactions passing through the bridge may be accumulated as posted writes or as pre-fetched data, although some embodiments will not use such techniques. Also, the bridge described herein can be part of a hierarchy using a plurality of such bridges having their primary side connected to the same bus or to buses of an equivalent or different level. Additionally, the illustrated ports can be of a different number or type, or can be eliminated in some embodiments. Also, the illustrated arbiter can be eliminated for secondary buses that are not design to be occupied by a master. While a sequence of steps is described above, in other embodiments these steps may be increased or reduced in number, or performed in a different order, without departing from the scope of the present invention.

Obviously, many modifications and variations of the present invention are possible in light of the above teachings. It is therefore to be understood that within the scope of the appended claims, the invention may be practiced otherwise than as specifically described.

## Claims

1. A docking system for allowing communications between a first bus (10) in a portable computer (126,126') and a second bus(12) in a docking station (130), said first bus and said second bus each being adapted to separately connect to respective ones of a plurality of bus-compatible devices (64,66), said docking system comprising:
a link (40,46);
a first interface (14) adapted to couple between said first bus and said link;
and
a second interface (16) adapted to couple between said second bus and said link;
said first interface and said second interface operating as a bridge, **characterised in that** said first interface and said second interface are operable to (a) serially send bus-related information through said link in a format different from that of said first bus and said second bus, wherein during a transaction on the first bus, the first interface is operable to transfer, from the bus, an address via the link and is arranged then to proceed, without waiting for an incoming acknowledgement over said link, to a data cycle and accept data from the first bus and transmit that via the link, and
(b) allow said portable computer, communicating through said first bus, to individually address one or more of the bus compatible devices (66) on said second bus using on said first bus substantially the same type of addressing as is used to access devices on said first bus.

2. A docking system according to claim 1 wherein said first interface (14) and said second interface (16) are operable to exchange bus-related information between said first bus (10) and said second bus (12) according to a predetermined hierarchy giving said first bus a higher level than said second bus.

3. A docking system according to claim 1 wherein said first interface (14) and said second interface (16) are operable to approve an initial exchange between said first bus (10) and said second bus (12) in response to a pending transaction having a characteristic signifying a destination across said link (40,46).

4. A docking system according to claim 1 wherein said first bus (10) and said second bus (12) each have a plurality of signalling lines for enabling bus-compatible devices (64, 66) to negotiate bus communications, said first interface (14) being operable in response to a pending transaction on said first bus to begin processing said pending transaction and to apply a retry signal to at least one of said signalling lines of said first bus before the pending transaction on said first bus has been transmitted to and acknowledged by said second bus.

5. A docking system according to claim 4 wherein less than all of the information on the signalling lines of said first bus (10) is transmitted by said first Interface (14) over said link (40, 46).

6. A docking system according to claim 4 wherein said first interface (14) comprises:
a first pair of first in first out registers (18, 22) for stacking information for successive groups of bus-related information gathered from and destined for said first bus (10).

7. A docking system according to claim 6 wherein said second interface (16) comprises:
a second pair of first in first out registers (20, 24) for stacking information for successive groups of bus-related information gathered from and destined for said second bus (12).

8. A docking system according to claim 1 comprising:
a remote plurality of port means (80, 82, 84, 86) coupled to said second interface (16) for providing a plurality of ports for input/output.

9. A docking system according to claim 8 comprising:
a local plurality of port means (80, 82, 84, 86) coupled to said first interface (14) for providing a plurality of ports for input/output.

10. A docking system according to claim 1 comprising:
a third bus (78) coupled to said second interface (16); and
a plurality of port means (80, 82, 84, 86) coupled to said third bus for providing a plurality of ports for input/output.

11. A docking system according to claim 10 wherein said plurality of ports (80, 82, 84, 86) are adapted to provide serial and parallel communications.

12. A docking system according to claim 10 wherein said plurality of ports (80, 82, 84, 86) are adapted to communicate separately to a keyboard and a pointing device.

13. A docking system according to claim 10 comprising:
a video means (102) coupled to said third bus (78) for supplying video signals from data received by said second interface (16) from said link (40, 46).

14. A docking system according to claim 8 comprising:
a video means (102) coupled to said second interface (16) for supplying video signals from data received by said second interface from said link (40, 46).

15. A docking system according to claim 1 wherein said first bus (10) comprises a PCMCIA 32-bit bus.

16. A docking system according to claim 1 wherein said first interface (14) and said second interface (16) comprise:
a first (56) and a second (58) programmable logic device connected between said link (40, 46) and said first bus (10) and said second bus (12), respectively.

17. A docking system according to claim 1 wherein said first interface (14) and said second interface (16) comprise:
a first (56) and a second (58) application-specific integrated circuit connected between said link (40, 46) and said first bus (10) and said second bus (12), respectively.

18. A docking system according to claim 17 wherein said first (56) and said second (58) application-specific integrated circuit are identically structured and each have a control pin (74, 76) for receiving a control signal to establish operation in one of two modes.

19. A docking system according to claim 18 wherein said first (56) and said second (58) application-specific integrated circuit each comprise:
an arbiter (70, 72), enabled only in said second application-specific integrated circuit (58), with authority to grant the second bus (12) and without authority to grant the first bus (10) to either said second interface (16) or one of the bus-compatible devices (66) on said second bus.

20. A docking system according to claim 17 comprising:
a dock housing containing said second application-specific integrated circuit (58) and said second bus (12); and
an assembly (116) coupled to said link (40, 46) and having a connector (118) adapted to connect to said portable computer (126, 126') said first application-specific integrated circuit (56) being mounted on said assembly.

21. A docking system according to claim 17 comprising:
a dock housing containing said second application-specific integrated circuit (58) and said second bus (12); and
a connector for said link (40, 46) mounted on said portable computer (126, 126') and coupled to said first interface (14), said first application-specific integrated circuit (56) being mounted in said portable computer.

22. A docking system according to claim 1 comprising:
an arbiter (70, 72) with authority to grant the second bus (12) and without authority to grant the first bus (10) to either said second interface (16) or one of the bus-compatible devices (66) on said second bus.

23. A docking system according to claim 1 wherein said first interface (14) is selectively responsive to those addresses appearing on said first bus (10) that are on a predetermined schedule of addresses corresponding to the bus-compatible devices (66) accessible through said second bus (12), in order to avoid responding to addresses corresponding to other ones of the bus-compatible devices (64) on said first bus (10).

24. A docking system according to claim 23 comprising:
a register (68) for storing said predetermined schedule.

25. A docking system according to claim 23 wherein said first interface (14) comprises:
a first register (68) for storing said predetermined schedule, said second interface (16) comprising:
a second register (67) for storing said predetermined schedule.

26. A docking system according to claim 24 wherein said register (68) is operable to establish with respect to said first bus (10) a base address for one or more of the bus-compatible devices (66) on said second bus (12).

27. A docking system according to claim 1 comprising:
a register (68) for establishing with respect to said first bus (10) a base address for one or more of the bus-compatible devices (66) on said second bus (12).

28. A docking system according to claim 1 wherein said first interface (14) and said secondary interface (16) are operable to permit communication between bus-compatible devices (66) on said second bus (12) without routing through said first bus (10).

29. A docking system according to claim 28 comprising:
an arbiter (70, 72) with authority to grant the second bus (12) and without authority to grant the first bus (10) to either said second interface (16) or one of the bus-compatible devices (66) on said second bus (12).

30. A docking system according to claim 1 wherein said portable computer (126, 126') is interrupt-driven, said second interface (16) being operable to transmit through said link (40, 46) to said first interface (14) interrupt signals destined to interrupt the portable computer.

31. A docking system according to claim 30 wherein said portable computer (126, 126') is responsive to error signals, said second interface (16) being operable to transmit through said link (40, 46) to said first interface (14) error signals destined to affect the portable computer.

32. A docking system according to claim 1 wherein said first bus (10) operates at a predetermined dock speed, said link (40, 46) being operable to propagate data between said first interface (14) and said second interface (16) at a bit transfer rate greater than said predetermined clock speed.

33. A docking system according to claim 32 wherein said link (40, 46) comprises:
a pair of simplex links (40, 46) for sending information in opposite directions.

34. A docking system according to claim 33 wherein said simplex links (40, 46) are driven for differential signal transfers.

35. A docking system according to claim 33 wherein each of said simplex links (40, 46) comprises a twisted pair.

36. A docking system according to claim 33 wherein each of said simplex links (40, 46) comprises a cable with twin axial lines (40A, 46A).

37. A docking system according to claim 36 comprising:
a single shield (122) around both of said simplex links (40, 46); and
a separate pair of individual shields (40B, 46B) around each of said simplex links (40, 46).

38. A docking system according to claim 1 wherein said second bus (12) comprises a PCI bus.

39. A docking system according to claim 7 wherein said second interface (16) is operable in response to a transaction from said link (40, 46) signifying an initial read request, to fetch and pre-fetch data from a competent one of the bus-compatible devices (66) on said second bus (12) for transmission back over said link in order to satisfy pending and anticipated transactions.

40. A docking system according to claim 39 wherein said first interface (14) is operable in response to a transaction from said link (40, 46) signifying an initial read request, to fetch and pre-fetch data from a competent one of the bus-compatible devices (64) on said first bus (10) for transmission back over said link in order to satisfy pending and anticipated transactions.

41. A docking system according to claim 1 wherein said first interface (14) and said second interface (16) are operable to permit at least one of the bus-compatible devices (66) on said second bus (12) to address one or more of the bus-compatible devices (64) on said first bus (10) using on said second bus substantially the same type of addressing as is used to access devices on said second bus.

42. A docking method for allowing bridge communications between a first bus (10) of a portable computer (126, 126') and a second bus (12) of a docking station (130), in order to communicate over a link (40,46), said first bus (10) and said second bus(12) each being adapted to separately connect to respective ones of a plurality of bus-compatible devices (64,66), said method comprising the steps of:
sending information between said first bus and said second bus over a bridge by serial transmission through said link (40,46) in a format different from that of said first bus and said second bus, wherein, during a transaction on the first bus, the first interface is operable to transfer, from the bus an address via the link and is arranged then to proceed, without waiting for an incoming acknowledgement over said link, to a data cycle and accept data from the first bus and transmit that via the link; and
allowing said portable computer, communicating through said first bus, to individually address one or more of the bus-compatible devices (66) on said second bus using on said first bus substantially the same type of addressing as is used to access devices on said first bus.

43. A method according to claim 42 comprising the step of:
exchanging bus-related information between said first bus (10) and said second bus (12) according to a predetermined hierarchy giving said first bus a higher level than said second bus.

44. A method according to claim 42 comprising the step of:
approving an initial exchange between said first bus (10) and said second bus (12) in response to a pending transaction having a characteristic signifying a destination across said link (40, 46).

45. A method according to claim 42 wherein said first bus (10) and said second bus (12) each have a plurality of signalling lines for enabling bus-compatible devices (64, 66) to negotiate bus communications, said method including the step of:
beginning processing of a pending transaction on the first bus, while applying a retry signal to at least one of said signalling lines of said first bus before the pending transaction on said first bus has been transmitted to and acknowledged by said second bus.

46. A method according to claim 45 wherein the step of applying signals to said signalling lines is performed by transmitting less than all of the information on the signalling lines of said firs bus (10) over said link (40, 46).

47. A method according to claim 45 comprising the step of:
stacking successive groups of bus-related information gathered from and destined for said first bus (10).

48. A method according to claim 47 comprising the step of:
stacking successive groups of bus-retated information gathered from and destined for said second bus (12).

49. A method according to claim 42 comprising the step of:
providing serial and parallel communications ports (80, 82, 84, 86) for said portable computer (126, 126') by conveying bus-related information over said link (40, 46).

50. A method according to claim 42 comprising the step of:
communicating to said portable computer (126, 126') separately through a keyboard and a pointing device by conveying bus-related information over said link (40, 46).

51. A method according to claim 42 comprising the step of:
supplying video signals from data conveyed over said link (40, 46).

52. A method according to claim 42 comprising the step of;
selecting a PCMCIA 32-bit bus on said portable computer to act as said first bus (10).

53. A method according to claim 42 comprising the step of:
selectively using said link (40, 46) for those addresses appearing on said first bus (10) that are on a predetermined schedule of addresses corresponding to the bus-compatible devices (66) accessible through said second bus (12), in order to avoid responding to addresses corresponding to other ones of the bus-compatible devices (64) on said first bus (10).

54. A method according to claim 42 comprising the step of:
establishing with respect to said first bus (10) a base address for one or more of the bus-compatible devices (66) on said second bus (12).

55. A method according to claim 42 comprising the step of:
permitting communication between bus-compatible devices (66) on said second bus (12) without routing through said first bus (10).

56. A method according to claim 42 wherein said portable computer (126, 126') is interrupt-driven, said method comprising the step of:
transmitting through said link (40, 46) interrupt signals destined to interrupt the portable computer.

57. A method according to claim 56 wherein said portable computer (126, 126') is responsive to error signals, said method comprising the step of:
transmitting through said link (40, 46) to said portable computer error signals destined to affect the portable computer.

58. A method according to claim 42 wherein said first bus (10) operates at a predetermined clock speed, said method comprising the step of:
propagating data over said link (40, 46) at a bit transfer rate greater than said predetermined clock speed.

59. A method according to claim 58 wherein the step of sending bus-related information through said link (40, 46) comprises:
sending information in opposite directions over a pair of simplex links (40, 46).

60. A method according to claim 42 wherein the step of addressing bus-compatible devices on said second bus (12) is performed in accordance with a PCI standard.

61. A method according to claim 48 wherein:
fetching and pre-fetching, in response to a transaction from said link (40, 46) signifying an initial read request, data from a competent one of the bus-compatible devices (68) on said second bus (12) for transmission back over said link in order to satisfy pending and anticipated transactions.

62. A method according to claim 61 wherein:
fetching and pre-fetching, in response to a transaction from said link (40, 46) signifying an initial read request, data from a competent one of the bus-compatible devices (64) on said first bus (10) for transmission back over said link in order to satisfy pending and anticipated transactions.

63. A method according to claim 42 comprising the step of:
permitting at least one of the bus-compatible devices (66) on said second bus (12) to address one or more of the bus-compatible devices (64) on said first bus (10) using on said second bus substantially the same type of addressing as is used to access devices on said second bus.

64. A method according to claim 1 wherein said first interface (14) and said second interface (16) are operable to serially send information through said link (40, 46) without handshaking.

65. A docking system according to claim 1, wherein the bridge is a single bridge.

66. A method according to claim 42, wherein the bridge is a single bridge.

## Patentansprüche

1. Ankoppelsystem zum Ermöglichen einer Nachrichtenverbindung zwischen einem ersten Bus (10) in einem tragbaren Computer (126, 126') und einem zweiten Bus (12) in einer Ankoppelstation (130), wobei der erste Bus und der zweite Bus jeweils ausgebildet sind, getrennt an einzelne aus einer Mehrzahl von buskompatiblen Geräten (64, 66) angeschlossen zu werden, umfassend:
eine Verbindung (40, 46);
eine erste Schnittstelle (14), die dazu ausgebildet ist, eine Kopplung zwischen dem ersten Bus und der Verbindung herzustellen; und
eine zweite Schnittstelle (16), die dazu ausgebildet ist, eine Kopplung zwischen dem zweiten Bus und der Verbindung herzustellen;
wobei die erste Schnittstelle und die zweite Schnittstelle als Brücke arbeiten,
**dadurch gekennzeichnet, dass** die erste Schnittstelle und die zweite Schnittstelle in der Weise betreibbar sind, dass sie
(a) seriell busbezogene Information über die Verbindung in einem Format senden, welches verschieden ist von jenem des ersten Busses und des zweiten Busses, wobei während einer Transaktion auf dem ersten Bus die erste Schnittstelle betreibbar ist, um von dem Bus über die Verbindung eine Adresse zu transferieren, und dazu ausgebildet ist, anschließend ohne auf das Ankommen einer Bestätigung über die Verbindung zu werten, in einen Datenzyklus überzugehen und Daten von dem ersten Bus zu akzeptieren und diese über die Verbindung zu übertragen, und
(b) dem tragbaren Computer, der über den ersten Bus kommuniziert, ermöglichen, individuell ein oder mehrere der buskompatiblen Geräte (66) an dem zweiten Bus zu adressieren, wobei auf dem ersten Bus im Wesentlichen der gleiche Typ von Adressierung verwendet wird, der auch für den Zugriff auf an dem ersten Bus befindliche Geräte verwendet wird.

2. System nach Anspruch 1, bei dem die erste Schnittstelle (14) und die zweite Schnittstelle (16) betreibbar sind, um busbezogene Information zwischen dem ersten Bus (10) und dem zweiten Bus (12) gemäß einer vorbestimmten Hierarchie auszutauschen, welche dem ersten Bus eine höhere Ebene verleiht als dem zweiten Bus.

3. System nach Anspruch 1, bei dem die erste Schnittstelle (14) und die zweite Schnittstelle (16) betreibbar ist, einen anfänglichen Austausch zwischen dem ersten Bus (10) und dem zweiten Bus (12) ansprechend auf eine anhängige Transaktion zu erlauben, die eine Charakteristik besitzt, welche ein Bestimmungsziel über die Verbindung (40, 46) kennzeichnet.

4. System nach Anspruch 1, bei dem der erste Bus (10) und der zweite Bus (12) jeweils mehrere Meldeleitungen enthalten, um buskompatiblen Geräten (64, 66) zu ermöglichen, Buskommunlkationen zu verhandeln, wobei die erste Schnittstelle (14) ansprechend auf eine anhängige Transaktion auf dem ersten Bus betreibbar ist, um die Verarbeitung der anhängigen Transaktion zu beginnen und zumindest auf eine der Meldeleitungen des ersten Busses ein Neuversuchs-Signal gibt, bevor die anhängige Transaktion an dem ersten Bus zu dem zweiten Bus übertragen und bestätigt wurde.

5. System nach Anspruch 4, bei dem weniger als die gesamte Information auf den Meldeleitungen des ersten Busses (10) von der ersten Schnittstelle (14) über die Verbindung (40, 46) übertragen wird.

6. System nach Anspruch 4, bei dem die erste Schnittstelle (14) aufweist:
ein erstes Paar von First-in-first-out-Registern (18, 20) zum Stapeln von Information für aufeinanderfolgende Gruppen busbezogener Informationen, die von dem ersten Bus (10) aufgenommen und für den ersten Bus (10) bestimmt sind.

7. System nach Anspruch 6, bei dem die zweite Schnittstelle (16) aufweist:
ein zweites Paar von First-in-first-out-Registern (20, 24) zum Stapeln von Information für aufeinanderfolgende Gruppen Bus-bezogener Informationen, die von dem zweiten Bus (12) gesammelt und für den zweiten Bus bestimmt sind.

8. System nach Anspruch 1, umfassend:
eine Mehrzahl von entfernten Anschlusseinrichtungen (80, 82, 84, 86), die an die zweite Schnittstelle (16) gekoppelt sind, um mehrere Eingabe-/Ausgabe-Anschlüsse zu erhalten.

9. System nach Anspruch 8, umfassend:
eine Mehrzahl von örtlichen Anschlusseinrichtungen (80, 82, 84, 86), die an die erste Schnittstelle (14) gekoppelt sind, um mehrere Eingangs-/Ausgangs-Anschlüsse zu bilden.

10. System nach Anspruch 1, umfassend;
einen dritten Bus (78), der mit der zweiten Schnittstelle (16) gekoppelt ist; und
eine Mehrzahl von Anschlusseinrichtungen (80, 82, 84, 86), die an den dritten Bus gekoppelt sind, um mehrere Eingabe-/Ausgabe-Anschlüsse zu erhalten.

11. System nach Anspruch 10, bei dem die mehreren Anschlüsse (80, 82, 84, 86) dazu ausgebildet sind, serielle und parallele Übertragungen zu ermöglichen.

12. System nach Anspruch 10, bei dem die mehreren Anschlüsse (80, 82, 84, 86) dazu ausgebildet sind, separat mit einer Tastatur und einem Zeigegerät zu kommunizieren.

13. System nach Anspruch 10, umfassend;
eine Videoeinrichtung (102), die mit dem dritten Bus (78) gekoppelt ist, um aus Daten, die über die zweite Schnittstelle (16) von der Verbindung (40, 46) erhalten wurden, Videoslgnale zu liefern.

14. System nach Anspruch 8, umfassend:
eine Videoeinrichtung (102), die mit der zweiten Schnittstelle (16) gekoppelt ist, um aus Daten, die von der Verbindung (40, 46) über die zweite Schnittstelle empfangen wurden, Videosignale bereitzustellen.

15. System nach Anspruch 1, bei dem der erste Bus (10) ein PCMACIA-32-Blt-Bus ist.

16. System nach Anspruch 1, bei dem die erste Schnittstelle (14) und die zweite Schnittstelle (18) umfassen:
eine erste (56) und eine zweite (58) programmierbare Logikeinrichtung, die zwischen die Verbindung (40, 46) und den ersten Bus (10) bzw. den zweiten Bus (12) geschaltet ist.

17. System nach Anspruch 1, bei dem die erste Schnittstelle (14) und die zweite Schnittstelle (16) aufweisen:
eine erste (56) und eine zweite (58) anwendungsspezifische integrierte Schaltung, die zwischen die Verbindung (40, 46) und den ersten Bus (10) bzw. den zweiten Bus (12) geschaltet ist.

18. System nach Anspruch 17, bei dem die erste (56) und die zweite (58) anwendungsspezifische integrierte Schaltung identisch aufgebaut sind und jeweils einen Steuerpin (74, 76) zum Empfangen eines Steuersignals aufweisen, welches den Betrieb in einer von zwei Betriebsarten festlegt.

19. System nach Anspruch 18, bei dem die erste (56) und die zweite (58) anwendungsspezifische integrierte Schaltung jeweils aufweisen:
einen Entscheider (70, 72), der nur in der zweiten anwendungsspezifischen integrierten Schaltung (58) mit der Autorität zum Zuweisen des zweiten Busses (12) freigegeben wird, jedoch ohne Autorität zum Zuweisen des ersten Busses (10) zu entweder der zweiten Schnittstelle (16) oder zu einer der buskompatiblen Einrichtungen (66) an dem zweiten Bus.

20. System nach Anspruch 17, umfassend:
ein Ankoppelgehäuse, welches die zweite anwendungsspezifische integrierte Schaltung (58) und den zweiten Bus (12) beinhaltet; und
eine mit der Verbindung (40, 46) gekoppelte Anordnung (116), die einen Verbinder (118) aufweist, geeignet zum Anschließen der ersten anwendungsspezifischen integrierten Schaltung (56), die an der Anordnung angebracht ist, an den tragbaren Computer (126, 126').

21. System nach Anspruch 17, umfassend:
ein Ankoppelgehäuse, welches die zweite anwendungsspezifische integrierte Schaltung (58) und den zweiten Bus (12) beinhaltet; und
einen Verbinder für die Verbindung (40, 46), die an dem tragbaren Computer (126, 126') angebracht ist und mit der ersten Schnittstelle (14) gekoppelt ist, wobei die erste anwendungsspezifische integrierte Schaltung (56) an dem tragbaren Computer angebracht ist.

22. System nach Anspruch 1, umfassend:
einen Entscheider (70, 72) mit der Autorität zum Zuweisen des zweiten Busses (12) und ohne Autorität zum Zuweisen des ersten Busses (10) zu entweder der zweiten Schnittstelle (16) oder einer der buskompatiblen Einrichtungen (66) an dem zweiten Bus.

23. System nach Anspruch 1, bei dem die erste Schnittstelle (14) selektiv auf solche Adressen anspricht, die auf dem ersten Bus (10) erscheinen und in einem vorbestimmten Adressenplan enthalten sind, der den buskompatiblen Einrichtungen (66) entspricht, auf die über den zweiten Bus (12) zugreifbar ist, um ein Antworten auf Adressen zu vermelden, die anderen von den buskompatiblen Einrichtungen (64) an dem ersten Bus (10) entsprechen.

24. System nach Anspruch 23, umfassend:
ein Register (68) zum Speichern des vorbestimmten Plans.

25. System nach Anspruch 23, bei dem die erste Schnittstelle (14) aufweist:
ein erstes Register (68) zum Speichern des vorbestimmten Plans, und die zweite Schnittstelle (16) aufweist:
ein zweites Register (67) zum Speichern des vorbestimmten Plans.

26. System nach Anspruch 24, bei dem des Register (68) in der Weise betreibbar ist, dass für den ersten Bus (10) eine Basisadresse für eine oder mehrere der buskompatiblen Einrichtungen (66) an dem zweiten Bus (12) eingerichtet wird.

27. System nach Anspruch 1, umfassend:
ein Register (68) zum Einrichten einer Basisadresse für eine oder mehrere der buskompatiblen Einrichtungen (66) an dem zweiten Bus (12) in Bezug auf den ersten Bus (10).

28. System nach Anspruch 1, bei dem die erste Schnittstelle (14) und die zweite Schnittstelle (16) in der Weise betreibbar sind, dass eine Kommunikation zwischen buskompatiblen Einrichtungen (66) an dem zweiten Bus (12) möglich ist ohne Umweg über den ersten Bus (10).

29. System nach Anspruch 28, umfassend:
einen Entscheider (70, 72) mit Autorität zum Zuweisen des zweiten Busses (12) und ohne Autorität zum Zuweisen des ersten Busses (10) zu entweder der zweiten Schnittstelle (16) oder einer der buskompatiblen Einrichtungen (66) an dem zweiten Bus (12).

30. System nach Anspruch 1, bei dem der tragbare Computer (126, 126') interrupt-gesteuert ist, und die zweite Schnittstelle (16) betreibbar ist zum Übertragen von Interrupt-Signalen zum Unterbrechen des tragbaren Computers über die Verbindung (40, 46) zu der ersten Schnittstelle (14).

31. System nach Anspruch 30, bei dem der tragbare Computer (126, 126') auf Fehlersignale anspricht, wobei die zweite Schnittstelle (16) betreibbar ist zum Übertragen von Fehlersignalen zum Beeinflussen des tragbaren Computers über die Verbindung (40, 46) zu der ersten Schnittstelle (14).

32. System nach Anspruch 1, bei dem der erste Bus (10) mit einer vorbestimmten Taktgeschwindigkeit arbeitet, und die Verbindung (40, 46) betreibbar ist zum Verbreiten von Daten zwischen der ersten Schnittstelle (14) und der zweiten Schnittstelle (16) mit einer Bittransferrate, die größer ist als die vorbestimmte Taktgeschwindigkeit.

33. System nach Anspruch 32, bei dem die Verbindung (40, 46) aufweist:
ein Paar Simplex-Verbindungen (40, 46) zum Senden von Information in einander entgegengesetzte Richtungen.

34. System nach Anspruch 33, bei dem die Simplex-Verbindungen (40, 46) für Differenzsignaltransfers betrieben werden.

35. System nach Anspruch 33, bei dem jede der Simplex-Verbindungen (40, 46) ein verddrilltes Leiterpaar enthält.

36. System nach Anspruch 33, bei dem jede der Simplex-Verbindungen (40, 46) ein Kabel mit Doppelaxialleitungen (40A, 46A) aufweist.

37. System nach Anspruch 36, umfassend:
eine einzelne Abschirmung (122), die beide Simplex-Verbindungen (40, 46) umgibt; und
ein getrenntes Paar individueller Abschirmungen (40B, 46B) um jede der Simplex-Verbindungen (40, 46).

38. System nach Anspruch 1, bei dem der zweite Bus (12) einen PCI-Bus enthält.

39. System nach Anspruch 7, bei dem die zweite Schnittstelle (16) ansprechend auf eine Transaktion von der Verbindung (40, 46) betreibbar ist, die eine Anfangs-Leseanforderung signalisiert, um aus einer zuständigen buskompatiblen Einrichtung (66) an dem zweiten Bus (12) Daten zur Übertragung zurück über die Verbindung zu holen und vorab zu holen, um anhängige und antizipierte Transaktionen abzuwickeln.

40. System nach Anspruch 39, bei dem die erste Schnittstelle (14) betreibbar ist in Abhängigkeit einer Transaktion seitens der Verbindung (40, 46), die eine Anfangs-Leseanforderung signalisiert, um Daten von einer zuständigen der buskompatiblen Einrichtungen (64) an dem ersten Bus (10) zur Übertragung zurück über die Verbindung zu holen und vorab zu holen, um anhängige und antizipierte Transaktionen abzuwickeln.

41. System nach Anspruch 1, bei dem die erste Schnittstelle (14) und die zweite Schnittstelle (16) betreibbar sind, um zumindest einer der buskompatiblen Einrichtungen (66) an dem zweiten Bus (12) zu erlauben, eine oder mehrere der buskompatiblen Einrichtungen (64) an dem ersten Bus (10) unter Verwendung von etwa dem gleichen Typ der Adressierung auf dem zweiten Bus zu adressieren, wie er zum Adressieren von Einrichtungen an dem zweiten Bus verwendet wird.

42. Koppelverfahren zum Ermöglichen von Brückenverbindungen zwischen einem ersten Bus (10) eines tragbaren Computers (126, 126') und einem zweiten Bus (12) einer Ankoppelstation (130), um über eine Verbindung (40, 46) zu kommunizieren, wobei der erste Bus (10) und der zweite Bus (12) jeweils dazu ausgebildet sind, separat an mehrere aus einer Mehrzahl von buskompatiblen Einrichtungen (64, 66) angeschlossen zu werden, umfassend folgende Schritte:
Senden von Information zwischen dem ersten Bus und dem zweiten Bus über eine Brücke durch serielle Übertragung über die Verbindung (40, 46) in einem Format, welches sich von jenem des ersten Busses und des zweiten Busses unterscheidet, wobei während der Transaktion auf dem ersten Bus die erste Schnittstelle betreibbar ist, um von dem Bus eine Adresse über die Verbindung zu transferieren, und dazu ausgebildet ist, anschließend ohne Werten auf eine ankommende Bestätigung über die Verbindung weiter zu machen mit einem Datenzyklus, und Daten von dem ersten Bus zu akzeptieren und sie über die Verbindung zu übertragen; und
Freistellen des tragbaren Computers zum Kommunizieren über den ersten Bus, um Individuell eine oder mehrere der buskompatiblen Einrichtungen (66) an dem zweiten Bus zu adressieren unter Verwendung des ersten Busses von etwa demselben Adressiertyp, wie er für den Zugriff auf Einrichtungen an dem ersten Bus verwendet wird.

43. Verfahren nach Anspruch 42, umfassend den Schritt:
Austauschen von busbezogener Information zwischen dem ersten Bus (10) und dem zweiten Bus (12) nach Maßgabe einer vorbestimmten Hierarchie, die dem ersten Bus eine höhere Ebene zuordnet als dem zweiten Bus.

44. Verfahren nach Anspruch 42, umfassend den Schritt:
Genehmigen eines Anfangsaustausches zwischen dem ersten Bus (10) und dem zweiten Bus (12) ansprechend auf eine anhängige Transaktion mit einer eine Zieladresse kennzeichnenden Charakteristik über die Verbindung (40, 46).

45. Verfahren nach Anspruch 42, bei welchem der erste Bus (10) und der zweite Bus (12) jeweils eine Mehrzahl von Signalleitungen aufweisen, um buskompatible Einrichtungen (64, 66) in die Lage zu versetzen, Buskommunikation zu betreiben, wobei das Verfahren den Schritt enthält:
Beginnen der Verarbeitung einer anhängigen Transaktion an dem ersten Bus, während an mindestens eine der Signalleitungen des ersten Busses ein Nauversuchs-Signal angelegt wird, bevor die anhängige Transaktion auf dem ersten Bus zu dem zweiten Bus übertragen und von diesem bestätigt wurde.

46. Verfahren nach Anspruch 45, bei dem der Schritt des Anlegens von Slgnalen an die Signalleitungen durchgeführt wird, indem weniger als die gesamte Information auf den Signalleitungen des ersten Busses (10) über die Verbindung (40, 46) übertragen wird.

47. Verfahren nach Anspruch 45, umfassend den Schritt:
Stapeln sukzessiver Gruppen von busbezogener Information, die von dem ersten Bus (10) empfangen und für den ersten Bus bestimmt wurde.

48. Verfahren nach Anspruch 47, umfassend den Schritt:
Stapeln aufeinanderfolgender Gruppen von busbezogener Information, die von dem zweiten Bus empfangen wurde und für den zweiten Bus bestimmt ist.

49. Verfahren nach Anspruch 42, umfassend den Schritt:
Bereitstellen von seriellen und parallelen Kommunikationsanschlüssen (80, 82, 84, 86) für den tragbaren Computer (126, 126') durch Leiten von busbezogener Information über die Verbindung (40, 46).

50. Verfahren nach Anspruch 42, umfassend den Schritt:
Kommunizieren mit dem tragbaren Computer (126, 126') separat über eine Tastatur und eine Zeigereinrichtung, indem busbezogene Information über die Verbindung (40, 46) geleitet wird.

51. Verfahren nach Anspruch 42, umfassend den Schritt:
Liefern von Videosignalen aus über die Verbindung (40, 46) übertragenen Daten.

52. Verfahren nach Anspruch 42, umfassend den Schritt:
Auswählen eines PCMCIA-32-Bit-Busses an dem tragbaren Computer als ersten Bus (10).

53. Verfahren nach Anspruch 42, umfassend den Schritt:
selektives Verwenden der Verbindung (40, 46) für solche auf dem ersten Bus (10) auftretende Adressen, die sich auf einem vorbestimmten Adressenplan entsprechend den buskompatiblen Einrichtungen (66) befinden, auf die über den zweiten Bus (12) zugreifbar ist, um ein Ansprechen auf Adressen zu vermeiden, die anderen als den buskompatiblen Einrichtungen (64) an dem ersten Bus (10) entsprechen.

54. Verfahren nach Anspruch 42, umfassend den Schritt:
Einrichten einer Basisadresse für eine oder mehrere der buskompatiblen Einrichtungen (66) an dem zweiten Bus (12) in Bezug auf den ersten Bus (10).

55. Verfahren nach Anspruch 42, umfassend den Schritt:
Ermöglichen einer Kommunikation zwischen buskompatiblen Einrichtungen (66) an dem zweiten Bus (12) ohne Umleitung über den ersten Bus (10).

56. Verfahren nach Anspruch 42, bei dem der tragbare Computer (126, 126') interrupt-gesteuert ist, und das Verfahren folgenden Schritt aufweist:
Übertragen von Interrupt-Signalen über die Verbindung (40, 46), die dazu dienen, den tragbaren Computer zu unterbrechen.

57. Verfahren nach Anspruch 56, bei dem der tragbare Computer (126, 126') auf Fehlersignale anspricht, und das Verfahren folgenden Schritt aufweist:
Übertragen von zum Beeinflussen des tragbaren Computers bestimmten Fehlersignalen an den tragbaren Computer über die Verbindung (40, 46).

58. Verfahren nach Anspruch 42, bei dem der erste Bus (10) bei einer vorbestimmten Taktgeschwindigkeit arbeitet, und das Verfahren folgenden Schritt aufweist:
Ausbreiten von Daten über die Verbindung (40, 46) mit einer Bittransferrate, die größer ist als die vorbestimmte Taktgeschwindigkeit.

59. Verfahren nach Anspruch 58, bei dem der Schritt des Sendens von Bus-bezogener Information über die Verbindung (40, 46) aufweist:
Senden von Information in entgegengesetzte Richtungen über ein Paar von Simplex-Verbindungen (40, 46).

60. Verfahren nach Anspruch 42, bei dem der Schritt des Adressierens von Buskompatiblen Einrichtungen an dem zweiten Bus (12) gemäß einer PCI-Norm ausgeführt wird.

61. Verfahren nach Anspruch 48, bei dem
ansprechend auf eine Transaktion von der Verbindung (40, 46) die eine Anfangs-Leseanforderung signalisiert, Daten von einer zuständigen Einrichtung der buskompatiblen Einrichtungen (66) an dem zweiten Bus (12) geholt und vorab geholt werden für die Rückübertragung über die Verbindung, um anhängige und antizipierte Transaktionen abzuwickeln.

62. Verfahren nach Anspruch 61, bei dem ansprechend auf eine Transaktion von der Verbindung (40, 46), die eine Anfangs-Leseanforderung signalisiert, Daten von einer kompetenten Einrichtungen der buskompatiblen Einrlchtungen (64) an dem ersten Bus (10) geholt und vorab geholt werden für die Rückübertragung über die Verbindung, um anhängige und antizipierte Transaktionen abzuwickeln.

63. Verfahren nach Anspruch 42, umfassend die Schritte:
Erlauben zumindest einer der buskompatiblen Einrichtungen (66) an dem zweiten Bus (12), eine oder mehrere der buskompatiblen Einrichtungen (64) an dem ersten Bus (10) unter Verwendung des zweiten Busses zu adressieren, der im Wesentlichen vom gleichen Adressierungstyp ist, wie er zum Adressieren von Einrichtungen an dem zweiten Bus verwendet wird.

64. Verfahren nach Anspruch 1, bei dem die erste Schnittstelle (14) und die zweite Schnittstelle (18) betreibbar sind, um seriell Information ohne Handshaking über die zweite Verbindung (40, 46) zu senden.

65. Ankoppelsystem nach Anspruch 1, bei dem die Brücke eine Einzelbrücke ist.

66. Verfahren nach Anspruch 42, bei dem die Brücke eine Einzelbrücke ist.

## Revendications

1. Système d'accostage pour permettre des communications entre un premier bus (10) dans un ordinateur portable (126, 126') et un deuxième bus (12) dans une station d'accueil (130), ledit premier bus et ledit deuxième bus étant chacun adaptés pour se connecter séparément à des dispositifs compatibles bus respectifs d'une pluralité de dispositifs compatibles bus (64, 66), ledit système d'accostage comprenant :
une liaison de données (40, 46) ;
une première interface (14) adaptée pour être couplée entre ledit premier bus et ladite liaison de données ;
et
une deuxième interface (16) adaptée pour être couplée entre ledit deuxième bus et ladite liaison de données ;
ladite première interface et ladite deuxième interface fonctionnant comme un pont, **caractérisé en ce que** ladite première interface et ladite deuxième interface ont pour fonction de :
(a) envoyer en séries des informations orientées bus sur ladite liaison de données dans un format différent de celui dudit premier bus et dudit deuxième bus, dans lequel, au cours d'une transaction sur le premier bus, la première interface a pour fonction de transférer, depuis le bus, une adresse par le biais de la liaison de données et est prévue ensuite pour poursuivre, sans attendre un accusé de réception entrant sur ladite liaison de données vers un cycle donné et pour accepter des données en provenance du premier bus et les transmettre par le biais de la liaison de données ; et
(b) permettre audit ordinateur portable, communiquant par le biais dudit premier bus, d'adresser de façon individuelle un ou plusieurs des dispositifs compatibles bus (66) sur ledit deuxième bus en utilisant sur ledit premier bus sensiblement le même type d'adressage que celui qui est utilisé pour accéder à des dispositifs sur ledit premier bus.

2. Système d'accostage selon la revendication 1 dans lequel ladite première interface (14) et ladite deuxième interface (16) ont pour fonction d'échanger des informations orientées bus entre ledit premier bus (10) et ledit deuxième bus (12) conformément à une hiérarchie prédéterminée qui donne au dit premier bus un niveau supérieur audit deuxième bus.

3. Système d'accostage selon la revendication 1 dans lequel ladite première interface (14) et ladite deuxième interface (16) ont pour fonction d'approuver un échange initial entre ledit premier bus (10) et ledit deuxième bus (12) en réponse à une transaction en cours dotée d'une caractéristique qui spécifie une destination sur ladite liaison de données (40, 46).

4. Système d'accostage selon la revendication 1 dans lequel ledit premier bus (10) et ledit deuxième bus (12) comprennent chacun une pluralité de lignes de signalisation afin de permettre à des dispositifs compatibles bus (64, 66) de négocier des communications de bus, ladite première interface (14) ayant pour fonction, en réponse à une transaction en cours sur ledit premier bus, de commencer à traiter ladite transaction en cours et à envoyer un signal de nouvelle tentative vers au moins une desdites lignes de signalisation dudit premier bus avant que la transaction en cours sur ledit premier bus ait été transmise vers, et accusée reçue par ledit deuxième bus.

5. Système d'accostage selon la revendication 4 dans lequel moins de la totalité des informations sur les lignes de signalisation dudit premier bus (10) est transmise par ladite première interface (14) sur ladite liaison de données (40, 46).

6. Système d'accostage selon la revendication 4 dans lequel ladite première interface (14) comprend :
une première paire de registres premier entré, premier sorti (18, 22) pour empiler des informations pour des groupes successifs d'informations orientées bus recueillies à partir dudit, et destinées au dit premier bus (10).

7. Système d'accostage selon la revendication 6, dans lequel ladite deuxième interface (16) comprend :
une deuxième paire de registres premier entré, premier sorti (20, 24) pour empiler des informations pour des groupes successifs d'informations orientées bus recueillies à partir dudit, et destinées au dit deuxième bus (12).

8. Système d'accostage selon la revendication 1, comprenant : une pluralité distante de moyens formant ports (80, 82, 84, 86) qui est couplée à ladite deuxième interface (16) pour fournir une pluralité de ports d'entrée/sortie.

9. Système d'accostage selon la revendication 8, comprenant : une pluralité locale de moyens formant ports (80, 82, 84, 86) qui est couplée à ladite première interface (14) pour fournir une pluralité de ports d'entrée/sortie.

10. Système d'accostage selon la revendication 1, comprenant :
un troisième bus (78) qui est couplé à ladite deuxième interface (16) ; et
une pluralité de moyens formant ports (80, 82, 84, 86) qui est couplée au dit troisième bus pour fournir une pluralité de ports d'entrée/sortie.

11. Système d'accostage selon la revendication 10 dans lequel ladite pluralité de ports (80, 82, 84, 86) est adaptée pour fournir des communications en série et des communications en parallèle.

12. Système d'accostage selon la revendication 10 dans lequel ladite pluralité de ports (80, 82, 84, 86) est adaptée pour communiquer séparément avec un clavier et un dispositif de pointage.

13. Système d'accostage selon la revendication 10, comprenant : des moyens vidéo (102) qui sont couplés audit troisième bus (78) pour fournir des signaux vidéo à partir de données reçues par ladite deuxième interface (16) depuis ladite liaison de données (40, 46).

14. Système d'accostage selon la revendication 8, comprenant : des moyens vidéo (102) qui sont couplés à ladite deuxième interface (16) pour fournir des signaux vidéo à partir de données reçues par ladite deuxième interface depuis ladite liaison de données (40, 46).

15. Système d'accostage selon la revendication 1 dans lequel ledit premier bus (10) comprend un bus PCMCIA de 32 bits.

16. Système d'accostage selon la revendication 1 dans lequel ladite première interface (14) et ladite deuxième interface (16) comprennent :
un premier (56) et un deuxième (58) dispositifs logiques programmables qui sont raccordés entre ladite liaison de données (40, 46) et ledit premier bus (10) et ledit deuxième bus (12), respectivement.

17. Système d'accostage selon la revendication 1 dans lequel ladite première interface (14) et ladite deuxième interface (16) comprennent :
un premier (56) et un deuxième (58) circuits intégrés à application spécifique qui sont raccordés entre ladite liaison de données (40, 46) et ledit premier bus (10) et ledit deuxième bus (12), respectivement.

18. Système d'accostage selon la revendication 17 dans lequel ledit premier (56) et ledit deuxième (58) circuits intégrés à application spécifique sont structurés de manière identique, et sont munis chacun d'une broche de commande (74, 76) pour recevoir un signal de commande destiné à permettre d'établir un fonctionnement dans un de deux modes.

19. Système d'accostage selon la revendication 18 dans lequel ledit premier (56) et ledit deuxième (58) circuits intégrés à application spécifique comprennent chacun :
un dispositif d'arbitrage (70, 72), qui est activé uniquement dans ledit deuxième circuit intégré à application spécifique (58), et qui a autorité pour donner accès au deuxième bus (12) et qui est dépourvu d'autorité pour donner accès au premier bus (10) sur ladite deuxième interface (16) ou sur un des dispositifs compatibles bus (66) sur ledit deuxième bus.

20. Système d'accostage selon la revendication 17, comprenant :
un compartiment d'accostage contenant ledit deuxième circuit intégré à application spécifique (58) et ledit deuxième bus (12) ; et
un assemblage (116) qui est couplé à ladite liaison de données (40, 46) et qui possède un connecteur (118) adapté pour connecter audit ordinateur portable (126, 126') ledit premier circuit intégré à application spécifique (56) qui est monté sur ledit assemblage.

21. Système d'accostage selon la revendication 17, comprenant :
un compartiment d'accostage contenant ledit deuxième circuit intégré à application spécifique (58) et ledit deuxième bus (12) ; et
un connecteur pour ladite liaison de données (40, 46) qui est monté sur ledit ordinateur portable (126, 126') et qui est couplé à ladite première interface (14), ledit premier circuit intégré à application spécifique (56) étant monté dans ledit ordinateur portable.

22. Système d'accostage selon la revendication 1, comprenant :
un dispositif d'arbitrage (70, 72), qui a autorité pour conférer le deuxième bus (12) et qui est dépourvu d'autorité pour conférer le premier bus (10) sur ladite deuxième interface (16) ou sur l'un des dispositifs compatibles bus (66) sur ledit deuxième bus.

23. Système d'accostagé selon la revendication 1 dans lequel ladite première interface (14) répond de façon sélective à des adresses qui apparaissent sur ledit premier bus (10) qui se trouvent dans un premier tableau d'adresses correspondant aux dispositifs compatibles bus (66) accessible par le biais dudit deuxième bus (12), afin d'éviter de répondre à des adresses correspondant à d'autres parmi les dispositifs compatibles bus (64) sur ledit premier bus (10).

24. Système d'accostage selon la revendication 23, comprenant :
un registre (68) pour stocker ledit tableau d'adresses prédéterminé.

25. Système d'accostage selon la revendication 23 dans lequel ladite première interface (14) comprend :
un premier registre (68) pour stocker ledit tableau prédéterminé, ladite deuxième interface (16) comprenant :
un deuxième registre (67) pour stocker ledit tableau prédéterminé.

26. Système d'accostage selon la revendication 24 dans lequel ledit registre (68) a pour fonction d'établir par rapport au dit premier bus (10) une adresse de base pour un ou plusieurs des dispositifs compatibles bus (66) sur ledit deuxième bus (12).

27. Système d'accostage selon la revendication 1, comprenant :
un registre (68) pour établir par rapport audit premier bus (10) une adresse de base pour un ou plusieurs des dispositifs compatibles bus (66) sur ledit deuxième bus (12).

28. Système d'accostage selon la revendication 1 dans lequel ladite première interface (14) et ladite deuxième interface (16) ont pour fonction de permettre une communication entre des dispositifs compatibles bus (66) sur ledit deuxième bus (12) sans un routage à travers le premier bus (10).

29. Système d'accostage selon la revendication 28, comprenant :
un dispositif d'arbitrage (70, 72), qui a autorité pour conférer le deuxième bus (12) et qui est dépourvu d'autorité pour conférer le premier bus (10) à ladite deuxième interface (16) ou à un des dispositifs compatibles bus (66) sur ledit deuxième bus (12).

30. Système d'accostage selon la revendication 1 dans lequel ledit ordinateur portable (126, 126') est commandé en interruption, ladite deuxième interface (16) ayant pour fonction de transmettre, par le biais de ladite liaison de données (40, 46), vers ladite première interface (14), des signaux d'interruption destinés à provoquer l'interruption de l'ordinateur portable.

31. Système d'accostage selon la revendication 30 dans lequel ledit ordinateur portable (126, 126') réagit à des signaux d'erreur, ladite deuxième interface (16) ayant pour fonction de transmettre, par le biais de ladite liaison de données (40, 46), vers ladite première interface (14), des signaux d'erreur destinés à affecter l'ordinateur portable.

32. Système d'accostage selon la revendication 1 dans lequel ledit premier bus (10) fonctionne à une fréquence d'horloge prédéterminée, ladite liaison de données (40, 46) ayant pour fonction de propager des données entre ladite première interface (14) et ledite deuxième interface (16) à un taux de transfert de bits qui est plus élevé que ladite fréquence d'horloge prédéterminée.

33. Système d'accostage selon la revendication 32, dans lequel ladite liaison de données (40,46) comprend :
une paire de liaisons de données unidirectionnelles (40, 46) pour envoyer des données dans des directions opposées.

34. Système d'accostage selon la revendication 33 dans lequel lesdites liaisons de données unidirectionnelles (40, 46) sont activées pour des transferts de signaux différentiels.

35. Système d'accostage selon la revendication 33, dans lequel chacune desdites liaisons de données unidirectionnelles (40, 46) comprend une paire torsadée.

36. Système d'accostage selon la revendication 33 dans lequel chacune desdites liaisons de données unidirectionnelles (40, 46) comprend un câble avec des lignes axiales jumelées (40A, 46A).

37. Système d'accostage selon la revendication 36, comprenant :
une gaine de protection unique (122) autour des deux dites liaisons de données unidirectionnelles (40, 46) ; et
un paire séparée de gaines de protection individuelles (40B, 46B) autour de chacune desdites liaisons de données unidirectionnelles (40,46).

38. Système d'accostage selon la revendication 1, dans lequel ledit deuxième bus (12) comprend un bus PCI.

39. Système d'accostage selon la revendication 7 dans lequel ladite deuxième interface (16) a pour fonction, en réponse à une transaction en provenance de ladite liaison de données (40, 46), de signifier une demande de lecture initiale, de rechercher et de pré rechercher des données à partir d'un des dispositifs compatibles bus (66) compétents sur ledit deuxième bus (12), en vue de la transmission en retour sur ladite liaison de données afin de satisfaire des transactions en cours et des transactions anticipées.

40. Système d'accostage selon la revendication 39 dans lequel ladite première interface (14) a pour fonction, en réponse à une transaction en provenance de ladite liaison de données (40, 46), de signifier une demande de lecture initiale, de rechercher et de pré rechercher des données à partir d'un des dispositifs compatibles bus (64) compétents sur ledit premier bus (10) en vue de la transmission en retour sur ladite liaison de données afin de satisfaire des transactions en cours et des transactions anticipées.

41. Système d'accostage selon la revendication 1 dans lequel ladite première interface (14) et ladite deuxième interface (16) ont pour fonction de permettre au moins à un des dispositifs compatibles bus (66) sur ledit deuxième bus (12) d'adresser un ou plusieurs des dispositifs compatibles bus (64) sur ledit premier bus (10) en utilisant sur ledit deuxième bus sensiblement le même type d'adressage que celui qui est utilisé pour accéder à des dispositifs sur ledit deuxième bus.

42. Procédé d'accostage pour permettre des communications en pont entre un premier bus (10) d'un ordinateur portable (126, 126') et un deuxième bus (12) d'une station d'accueil (130), afin de communiquer par le biais d'une liaison de données (40, 46), ledit premier bus (10) et ledit deuxième bus (12) étant chacun adaptés pour se connecter séparément à des dispositifs compatibles bus respectifs d'une pluralité de dispositifs compatibles bus (64, 66), ledit procédé comprenant les étapes consistant à :
envoyer des informations entre ledit premier bus et ledit deuxième bus par le biais d'un pont par une transmission en série sur ladite liaison de données (40, 46) dans un format différent de celui dudit premier bus et dudit deuxième bus, dans lequel, au cours d'une transaction sur le premier bus, la première interface a pour fonction de transférer, depuis le bus, une adresse par le biais de la liaison de données et est prévue ensuite pour poursuivre, sans attendre un accusé de réception entrant sur ladite liaison de données vers un cycle donné et pour accepter des données en provenance du premier bus et les transmettre par le biais de la liaison de données ; et
permettre audit ordinateur portable, communiquant par le biais dudit premier bus, d'adresser de façon individuelle un ou plusieurs des dispositifs compatibles bus (66) sur ledit deuxième bus en utilisant sur ledit premier bus sensiblement le même type d'adressage que celui qui est utilisé pour accéder à des dispositifs sur ledit premier bus.

43. Procédé selon la revendication 42, comprenant en outre l'étape consistant à :
échanger des informations orientées bus entre ledit premier bus (10) et ledit deuxième bus (12) conformément à une hiérarchie prédéterminée qui donne audit premier bus un niveau supérieur audit deuxième bus.

44. Procédé selon la revendication 42, comprenant en outre l'étape consistant à :
approuver un échange initial entre ledit premier bus (10) et ledit deuxième bus (12) en réponse à une transaction en cours ayant une caractéristique qui spécifie une destination sur ladite liaison de données (40, 46).

45. Procédé selon la revendication 42, dans lequel ledit premier bus (10) et ledit deuxième bus (12) comprennent chacun une pluralité de lignes de signalisation afin de permettre à des dispositifs compatibles bus (64, 66) de négocier des communications de bus, ledit procédé comprenant l'étape consistant à :
commencer à traiter une transaction en cours sur le premier bus, tout en envoyant un signal de nouvelle tentative vers au moins une desdites lignes de signalisation dudit premier bus avant que la transaction en cours sur ledit premier bus ait été transmise vers, et accusée reçue par ledit deuxième bus.

46. Procédé selon la revendication 45, dans lequel l'étape d'envoi de signaux vers lesdites lignes de signalisation, est accomplie en transmettant moins de la totalité des informations sur les lignes de signalisation dudit premier bus (10) sur ladite liaison de données (40, 46).

47. Procédé selon la revendication 45, comprenant en outra l'étape consistant à :
empiler des groupes successifs d'informations orientées bus recueillies à partir dudit, et destinées audit premier bus (10).

48. Procédé selon la revendication 47, comprenant en outre l'étape consistant à :
empiler des groupes successifs d'informations orientées bus recueillies à partir dudit, et destinées audit deuxième bus (12).

49. Procédé selon la revendication 42, comprenant en outre l'étape consistant à :
prévoir des ports de communication en série et en parallèle (80, 82, 84, 86) pour ledit ordinateur portable (126, 126') en transportant des informations orientées bus sur ladite liaison de données (40, 46).

50. Procédé selon la revendication 42, comprenant en outre l'étape consistant à :
communiquer avec ledit ordinateur portable (126, 126') séparément par le biais d'un clavier et d'un dispositif de pointage en transportant des informations orientées bus sur ladite liaison de données (40, 46).

51. Procédé selon la revendication 42, comprenant en outre l'étape consistant à :
envoyer des signaux vidéo à partis des données transportées sur ladite liaison de données (40, 46).

52. Procédé selon la revendication 42, comprenant en outre l'étape consistant à :
sélectionner un bus PCMCIA de 32 bits sur ledit ordinateur portable pour agir en tant que ledit premier bus (10).

53. Procédé selon la revendication 42, comprenant en outre l'étape consistant à :
utiliser de façon sélective ladite liaison de données (40, 46) pour des adresses qui apparaissent sur ledit premier bus (10) qui se trouvent dans un premier tableau d'adresses correspondant aux dispositifs compatibles bus (66) accessible par le biais dudit deuxième bus (12), afin d'éviter de répondre à des adresses correspondant à d'autres parmi les dispositifs compatibles bus (64) sur ledit premier bus (10).

54. Procédé selon la revendication 42, comprenant en outre l'étape consistant à :
établir par rapport audit premier bus (10) une adresse de base pour un ou plusieurs des dispositifs compatibles bus (66) sur ledit deuxième bus (12).

55. Procédé selon la revendication 42, comprenant en outre l'étape consistant à :
permettre la communication entre des dispositifs compatibles bus (66) sur ledit deuxième bus (12) sans un routage par le biais dudit premier bus (10).

56. Procédé selon la revendication 42, dans lequel ledit ordinateur portable (126, 126') est commandé par interruptions, ledit procédé comprenant l'étape consistant à :
transmettre, par le biais de ladite liaison de données (40, 46), des signaux d'interruption destinés à provoquer l'interruption de l'ordinateur portable.

57. Procédé selon la revendication 56, dans lequel ledit ordinateur portable (126, 126') répond à des signaux d'erreur, ledit procédé comprenant l'étape consistant à :
transmettre, par le biais de ladite liaison de données (40, 46), vers ledit ordinateur portable, des signaux d'erreur destinés à affecter l'ordinateur portable.

58. Procédé selon la revendication 42, dans lequel ledit premier bus (10) fonctionne à une fréquence d'horloge prédéterminée, ledit procédé comprenant l'étape consistant à :
propager des données sur ladite liaison de données (40, 46) à un taux de transfert de bits qui est plus élevé que ladite fréquence d'horloge prédéterminée.

59. Procédé selon la revendication 58, dans lequel l'étape d'envoi d'informations orientées bus par le biais de ladite liaison de données (40, 46) comprend 1:
l'envoi d'informations dans des directions opposées sur une paire de liaisons de données unidirectionnelles (40, 46).

60. Procédé selon la revendication 42, dans lequel l'étape d'adressage de dispositifs compatibles bus sur ledit deuxième bus (12) est accomplie selon une norme PCI.

61. Procédé selon la revendication 48, dans lequel :
des données à partir d'un des dispositifs compatibles bus (68) compétents sur ledit deuxième bus (12) sont recherchées et pré-recherchées en réponse à une transaction en provenance de ladite liaison de données (40, 46) signifiant une demande de lecture initiale, en vue de la transmission en retour sur ladite liaison de données afin de satisfaire des transactions en cours et des transactions anticipées.

62. Procédé selon la revendication 61, dans lequel :
des données à partir d'un des dispositifs compatibles bus (64) compétents sur ledit premier bus (10) sont recherchées et pré-recherchées en réponse à une transaction en provenance de ladite liaison de données (40, 46) signifiant une demande de lecture initiale, en vue de la transmission on retour sur ladite liaison de données afin de satisfaire des transactions en cours et des transactions anticipées.

63. Procédé selon la revendication 42, comprenant l'étape consistant à :
permettre au moins à un des dispositifs compatibles bus (66) sur ledit deuxième bus (12) d'adresser un ou plusieurs des dispositifs compatibles bus (64) sur ledit premier bus (10) en utilisant sur ledit deuxième bus sensiblement le même type d'adressage que celui qui est utilisé pour accéder à des dispositifs sur ledit deuxième bus.

64. Procédé selon la revendication 1, dans lequel ladite première interface (14) et ladite deuxième interface (16) ont pour fonction d'envoyer des informations en série par le biais de ladite liaison de données (40, 46) sans poignée de main.

65. Système d'accostage selon la revendication 1, dans lequel le pont est un pont simple.

66. Procédé selon la revendication 42, dans lequel le pont est un pont simple.
